# EUROPÄISCHE PATENTANMELDUNG

(11) **EP 1 113 217 A2**
(43) Veröffentlichungstag der Anmeldung: **04.07.2001**
(21) Anmeldenummer: 00126596.6
(22) Anmeldetag: 13.12.2000
(51) Int. Cl.: F21S 8/10, F21V 8/00

(54) **Beleuchtungsvorrichtung für Fahrzeuge**

(30) Priorität: 27.12.1999 DE 19963337
(71) Anmelder: Hella KG Hueck & Co., 59552 Lippstadt (DE)
(72) Erfinder: Ott, Alfred, 71126 Gäufelden (DE); Frederking, Uwe, 70771 Leinfelden (DE); Heinz, Werner, 75233 Tiefenbronn (DE)
(74) Vertreter: Grüter, Klaus, Dipl.-Phys.

(57) **Zusammenfassung**

Die Erfindung betrifft eine Beleuchtungsvorrichtung für Fahrzeuge, die ein Lichtauskoppelelement (1,10,11,19,24) in einem Auskoppelraum (3) des Fahrzeugs vorsieht. Das Lichtauskoppelelement (1,10,11,19,24) wird von einer entfernt angeordneten Lichtquelle gespeist, wobei ein Lichtleiter (2) vorgesehen ist zwischen der Lichtquelle und dem Lichtauskoppelelement (1,10,11,19,24). Zur Erlangung einer optischen Abschirmung eines die Bauteile (16) aufnehmenden Innenraumes ist eine Blende (5,5',5'',5''',5'''') vorgesehen, die eine optische Abschirmung des rückwärtigen Innenraumes ermöglicht.

## Beschreibung

Die Erfindung betrifft eine Beleuchtungsvorrichtung für Fahrzeuge mit einem Lichtleiter, der das von einer Lichtquelle ausgesandte Licht in einen Auskoppelraum des Fahrzeugs leitet, mit mindestens einem in dem Auskoppelraum und mit einem Ende des Lichtleiters gekoppelten Lichtauskoppelelement, das das Licht entsprechend einer vorgegebenen Lichtverteilung in die Umgebung abstrahlt.

Aus der EP 0 678 699 B1 ist eine Beleuchtungsvorrichtung für Fahrzeuge bekannt, die zur Erzeugung einer vorgegebenen Lichtverteilung, beispielsweise einer Abblendlicht-, Fernlicht- oder Nebellichtfunktion, entsprechend geformte Lichtauskoppelelemente aufweist, die im Randbereich einer Fahrzeugaußenhaut angeordnet sind. Das Lichtauskoppelelement ist mit einem Lichtleiter verbunden, an dessen anderem Ende von einer Lichtquelle erzeugtes Licht eingekoppelt und mittels des Lichtleiters zu dem Lichtauskoppelelement übertragen wird. Ein solches Beleuchtungssystem ermöglicht ein platzsparendes Auskoppeln des Lichtes, weil die Kontur der Karosserieöffnung an die Kontur des Lichtauskoppelelementes angepaßt sein kann. Alternativ kann es jedoch auch vorgesehen sein, alle notwendigen Lichtauskoppelelemente nach Art eines Scheinwerfergehäuses in einem gemeinsamen Auskoppelraum anzuordnen. Sinnvollerweise ist dieser Auskoppelraum mit einer vorzugsweise transparenten Abdeckscheibe abgedeckt.

Aufgabe der vorliegenden Erfindung ist es, eine Beleuchtungsvorrichtung für Fahrzeuge derart weiterzubilden, dass im Nichtbetriebszustand eines Lichtauskoppelelementes ein homogenes optisches Erscheinungsbild des Auskoppelraumes geschaffen wird.

Zur Lösung dieser Aufgabe ist die erfindungsgemäße Beleuchtungsvorrichtung in Verbindung mit dem Oberbegriff des Patentanspruchs 1 dadurch gekennzeichnet, dass die Öffnung des Auskoppelraums mittels einer Abdeckscheibe dichtend abgeschlossen ist und dass in einem Abstand zu der Abdeckscheibe eine sich in einem Winkel zu einer optischen Achse des Lichtauskoppelelementes durch den Auskoppelraum erstreckende Blende vorgesehen ist, die den Auskoppelraum in einen der Abdeckscheibe zugewandten Vorderraum und einen der Abdeckscheibe abgewandten Rückraum trennt, und dass die Blende derart ausgebildet ist, dass in dem Rückraum angeordnete Bauteile optisch abgeschirmt sind.

Der besondere Vorteil der Erfindung besteht darin, dass eine Blende vorgesehen ist, die den Auskoppelraum trennt in einen der Abdeckscheibe zugewandten Vorderraum und einen der Abdeckscheibe abgewandten Rückraum, wobei im wesentlichen durch die Ausbildung der Blende selbst ein aus designtechnischen Gründen vorgegebener optischer Eindruck des Auskoppelraumes gewährleistet ist. Hierdurch wird die Erkennbarkeit der im Rückraum angeordneten Bauteile, wie beispielsweise Trägerelemente etc., verhindert, so dass der Auskoppelraum beim Betrachter ein homogenes Erscheinungsbild hervorruft.

Nach einer besonderen Ausführungsform der Erfindung besteht die Blende aus einem transparenten Material und weist eine Strukturierung bzw. Riffelung auf, derart, dass die im Rückraum angeordneten Bauteile nur schemenhaft erkennbar sind. Hierdurch kann ein homogener optischer Eindruck des Auskoppelraumes geschaffen werden, der unabhängig ist von der Geometrie der im Rückraum angeordneten Bauteile.

Nach einer Weiterbildung der Erfindung besteht die Blende aus einem teiltransparenten oder opaken Material, so dass ein homogenes Erscheinungsbild des Rückraums bzw. des Auskoppelraumes gewährleistet ist.

Nach einer Weiterbildung der Erfindung ist in dem Rückraum eine zusätzliche Lichtquelle oder ein Lichtauskoppelelement angeordnet, so dass eine Hinterleuchtung der Blende geschaffen wird, die eine optischer Hervorhebung des Auskoppelraumes bzw. des Rückraumes bewirkt. Bei einer transparenten Scheibe kann diese Hinterleuchtung dazu genutzt werden, bestimmte lichttechnische Bauteile, wie beispielsweise das Lichtauskoppelelement, zu beleuchten und dieses im Nichtbetriebszustand optisch hervorzuheben. Weiterhin kann diese Hinterleuchtung bei einer teiltransparenten Blende dazu genutzt werden, als Positionslicht zu dienen, wobei das Licht relativ gleich verteilt die Blende in Richtung der Abdeckscheibe verläßt.

Nach einer Weiterbildung der Erfindung kann die Blende oder die zur Hinterleuchtung dienende Lichtquelle bzw. das Lichtauskoppelelement farbig ausgebildet sein, so dass sich zusätzlich ein vorgegebener farblicher Effekt erzielen läßt.

Nach einer bevorzugten Ausführungsform der Erfindung weist die Blende Durchgangsöffnungen auf, so dass ein in dem Rückraum durch eine Heiz-/Lüftungseinrichtung erzeugter Luftstrom zu der Abdeckscheibe hin leitbar ist. Auf diese Weise wird eine Belüftung bzw. Beheizung der Abdeckscheibe geschaffen.

Nach einer Variante der Erfindung können die Durchgangsöffnungen als Schlitze ausgebildet sein, die sich parallel in einem Abstand zueinander, vorzugsweise über die gesamte Fläche der Blende erstrecken.

Alternativ kann ein Schlitz auch durch die nicht paßgenaue Lagerung eines Lichtauskoppelelementes in eine Aufnahmeöffnung der Blende gebildet sein, wobei sich ein Spalt zwischen dem Außenrand des Lichtauskoppelelementes und dem korrespondierenden Rand der Aufnahmeöffnung entsteht. Vorteilhaft kann hierdurch die Aufnahmeöffnung der Blende zum einen dazu dienen, das Lichtauskoppelelement aufzunehmen und eine ungehinderte Lichtabstrahlung für eine vorgegebene Lichtfunktion zu ermöglichen. Zum anderen wird durch die Dimensionierung der Aufnahmeöffnung, ein Luftdurchtritt durch den so gebildeten Spalt ermöglicht.

Nach einer Weiterbildung der Erfindung sind die Durchgangsöffnungen kreisförmig und nach Art eines Gitters verteilt über die Blende angeordnet. Zum einen lässt sich hierdurch ein eigenartiger optischer Effekt erzielen und zum anderen können diese Durchgangsöffnungen zur Aufnahme von Lichtquellen, beispielsweise Leuchtdioden, verwandt werden.

Nach einer Weiterbildung der Erfindung ist ein Heizelement in einem unteren Bereich zwischen der Blende und der Abdeckscheibe, vorzugsweise in einem unteren Randbereich der Abdeckscheibe und/oder der Blende, angeordnet. Hierdurch kann wirksam eine Beheizung der Abdeckscheibe erfolgen.

Alternativ kann das Heizelement auch auf einer der Abdeckscheibe abgewandten Seite der Blende, vorzugsweise in einem unteren Bereich derselben, angeordnet sein, so dass das Heizelement durch die Blende abgeschirmt ist. In Verbindung mit einer in dem Rückraum angeordneten Luftverteileinrichtung, insbesondere mit einem Ventilator, kann eine Luftzirkulation bzw. Luftverteilung erzeugt werden, so dass die Luftströmung in Richtung der Abdeckscheibe geführt wird. Vorzugsweise ist die Luftverteileinrichtung auf die Formgebung der Schlitze in der Blende abgestimmt, so daß die erwärmte Luftströmung zielgerichtet zu der Abdeckscheibe hingeleitet werden kann.

Weitere Vorteile der Erfindung ergeben sich aus den weiteren Unteransprüchen.

Nach einer Weiterbildung der Erfindung ist ein die Wärmestrahlung reflektierender Reflektor an der Blende angeformt, so dass die Wärmeausbeute des Heizelements verbessert wird. Vorzugsweise befindet sich der Reflektor auf einer der Abdeckscheibe zugewandten Seite der Blende in einem unteren Bereich derselben. Hier kann der Wärmestrahlungsweg vom Heizelement zur Abdeckscheibe wesentlich reduziert werden.

Ausführungsbeispiele der Erfindung werden nachfolgend anhand der Zeichnungen näher erläutert.

Es zeigen:
- Figur 1: eine schematische Ansicht einer Beleuchtungsvorrichtung mit einer Blende nach einem ersten Ausführungsbeispiel,
- Figur 2: eine Seitenansicht der Beleuchtungsvorrichtung mit einer Blende nach einem zweiten Ausführungsbeispiel,
- Figur 3: eine schematische Seitenansicht der Beleuchtungsvorrichtung mit einer Blende nach einem dritten Ausführungsbeispiel,
- Figur 4: eine schematische Teilansicht einer Birne nach einem vierten Ausführungsbeispiel und
- Figur 5: eine schematische Ansicht einer Abdeckscheibe mit Heizelementen.

Die Beleuchtungsvorrichtung besteht im wesentlichen aus ein oder mehreren Lichtauskoppelelementen 1, die jeweils über einen Lichtleiter 2 mit einer entfernt von einem Auskoppelraum 3 angeordneten Lichtquelle verbunden sind. Der Auskoppelraum 3 befindet sich nach Art eines Scheinwerfers im Bereich einer Fahrzeugaußenhaut und ist durch ein in einer Karosserieöffnung eingefaßtes und nicht dargestellte Gehäuse begrenzt. Die Lichtquelle kann im Bereich des Motorraums eines Kraftfahrzeugs angeordnet sein.

Der Auskoppelraum 3 ist mittels einer Blende 5 in einen Tragelemente für die im Auskoppelraum 3 angeordneten Bauteile, insbesondere Lichtauskoppelelement 1 usw., aufnehmenden Rückraum 6 und einen einer den Auskoppelraum 3 verschließenden Abdeckscheibe 7 zugewandten Vorderraum 8 geteilt.

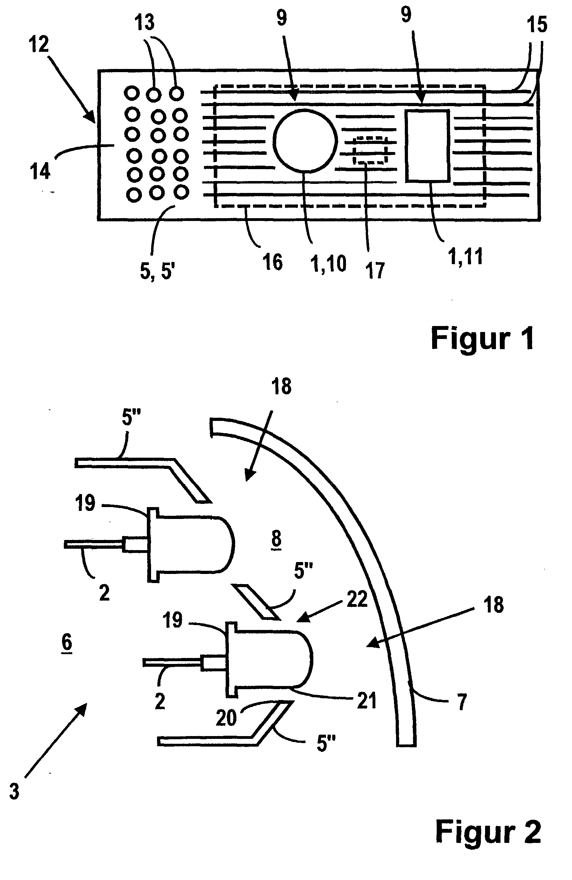

Nach einem ersten Ausführungsbeispiel der Blende 5 gemäß Figur 1 kann eine Blende 5' vorgesehen sein, die Aufnahmeöffnungen 9 für ein Lichtauskoppelelement 10 mit Abblendlichtfunktion und ein Lichtauskoppelelement 11 für die Nebellichtfunktion aufweist. Die Aufnahmeöffnungen 9 sind an die Kontur der Lichtauskoppelelemente 10 und 11 angepaßt, so dass dieselben mit Spiel innerhalb der Aufnahmeöffnungen 9 gelagert sind. Die Lichtauskoppelelemente 10 und 11 stehen zumindest mit ihren optisch wirksamen Oberflächen an der Vorderseite bezüglich der Blende 5' über, so dass die lichttechnische Funktion der Lichtauskoppelelemente 10, 11 durch die Blende 5' nicht beeinträchtigt wird.

In einem seitlichen Bereich 12 der Blende 5' sind eine Mehrzahl von kreisförmig angeordneten Aufnahmeöffnungen 13 angeordnet, in denen jeweils eine Leuchtdiode als Lichtquelle zur Bildung eines Lichtfeldes 14 für Blinklichtfunktion eingefaßt sind.

In einem zu dem seitlichen Bereich 12 angrenzenden Bereich der Blende 5' sind eine Mehrzahl von langlochartigen Durchgangsöffnungen vorgesehen, die sich als parallele Schlitze 15 in horizontaler Richtung erstrecken. Diese Schlitze 15 dienen als Luftdurchgangsöffnungen für einen Luftstrom, der durch eine in dem Rückraum 6 angeordnete Heiz-/Lüftungseinrichtung erzeugt wird und somit zu der Abdeckscheibe 7 geleitet werden kann. Hierdurch kann im Bedarfsfall eine ausreichende Belüftung bzw. Beheizung der Abdeckscheibe 7 erfolgen, so dass stets die für die Lichtfunktion der Beleuchtungsvorrichtung erforderliche Transparenz gegeben ist. Die Schlitze können eine Dicke von 2-3 mm aufweisen. Zur Ermöglichung einer gezielten Luftführung können die Längsseiten der Schlitze 15 ein nicht dargestelltes abragendes Luftleitelement aufweisen, das einstückig mit der Blende 5' verbunden ist.

Alternativ können die Schlitze 15 auch in vertikaler Richtung, wellen-, bogenförmig verlaufen. Wesentlich ist, dass die Schlitze 15 möglichst gleich verteilt angeordnet sind und die Aufnahmeöffnungen 9 für die Lichtauskoppelelemente 10, 11 umgeben, so dass eine homogene Belüftung bzw. Beheizung der Abdeckscheibe 7 gewährleistet ist.

Zur Erzeugung eines optischen Effektes kann die Blende 5' aus einem transparenten Material, beispielsweise PMMA, hergestellt sein und eine Strukturierung bzw. Riffelung aufweisen, so dass die im Rückraum 6 befindlichen Bauteile, insbesondere eine Trägerplatte 16 zur Halterung der Lichtauskoppelelemente 10, 11 und der Leuchtdioden, optisch nicht wahrnehmbar sind. Eine solche optische "Vereinheitlichung" des Rückraums 6 wird durch die Schlitze 15 bzw. durch die von diesen abragenden Luftleitelementen gefördert.

Ein weiterer optischer Effekt kann durch eine im Rückraum 6 angeordnete Lichtquelle 17 bewirkt werden, die den Rückraum 6 ausleuchtet und im Zusammenwirken mit der Blende 5' eine Hinterleuchtung derselben ermöglicht. Im Nichtbetriebszustand der Lichtauskoppelelemente 10, 11 kann somit ein homogener aktiver Beleuchtungszustand erzeugt werden, der beispielsweise als Positionslicht der Beleuchtungsvorrichtung dienen kann.

Alternativ kann die Lichtquelle 17 auch derart in dem Rückraum 6 positioniert sein, so dass eine optische Hervorhebung der einzelnen Lichtauskoppelelemente 10, 11 oder bei vollständiger Transparenz der Blende 5' von bestimmten im Rückraum 6 angeordneten Bauteilen ermöglicht wird.

Nach einem zweiten Ausführungsbeispiel der Blende 5 gemäß Figur 2 kann eine Blende 5`` geneigt ausgebildet sein, wobei sie sich im wesentlichen parallel zu der Abdeckscheibe 7 erstreckt. Die Blende 5'' ist randseitig an einer nicht dargestellten, die Bauteile tragenden Trägerplatte befestigt. Sie weist lediglich Aufnahmeöffnungen 18 auf, in die jeweils Lichtauskoppelelemente 19 bereichsweise hineinragen. Die Lichtauskoppelelemente 19 sind auf der nicht dargestellten Trägerplatte so angeordnet, dass zwischen einem Rand 20 der Aufnahmeöffnung 18 und einer Außenfläche 21 des Lichtauskoppelelementes 19 ein umlaufender Spalt 22 entsteht, der als Luftdurchgangsöffnung für den von einer im Rückraum 6 angeordneten Heiz-/Lüftungseinrichtung erzeugten Luftstrom dient. Hierdurch wird auf einfache Weise die Belüftung bzw. Beheizung der Abdeckscheibe 7 ermöglicht, wobei durch Ausgestaltung der Blende 5'' beispielsweise durch eine Einfärbung, die im Rückraum 6 befindlichen Bauteile optisch verborgen bleiben.

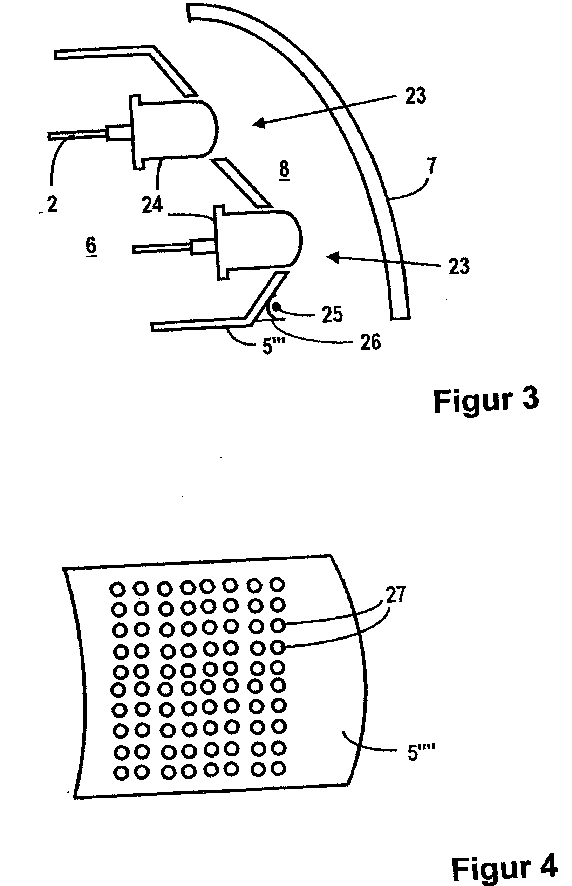

Nach einem weiteren Ausführungsbeispiel der Blende 5 gemäß Figur 3 besteht eine Blende 5''' aus einem durch Bedampfung bewirkten halbtransparenten Material, so dass der Rückraum 6 optisch abgeschirmt ist. Die Blende 5''' weist Aufnahmeöffnungen 23 auf, in denen jeweils Lichtauskoppelelemente 24 im Unterschied zu dem vorhergehenden Ausführungsbeispiel spielfrei eingesetzt sind. Zur Ermöglichung einer Beheizung der Abdeckscheibe 7 sind ein oder mehrere Heizelemente 25 auf einer der Abdeckscheibe 7 zugewandten Seite der Blende 5``` angeordnet. Die Heizelemente 25 können als Heizdrähte ausgebildet sein, die in einem muldenförmigen Kanal 26 eingefaßt sind. Der muldenförmige Kanal 26 erstreckt sich im wesentlichen in horizontaler Richtung über die gesamte Länge der Blende 5'''. Der Kanal ist konkavförmig ausgebildet und mit Aluminium bedampft, so dass eine gezielte Wärmeabstrahlung ermöglicht wird. Der Öffnungswinkel der Mulde ist abhängig von dem Abstand derselben zu der Abdeckscheibe 7 bzw. von der Dimension der zu beheizenden Fläche der Abdeckscheibe 7.

Alternativ kann das Heizelement 25 auch als InfrarotStrahler ausgebildet sein. Dadurch, dass die Mulde als Reflektor ausgebildet ist, kann eine gerichtete Wärmestrahlung erzielt werden.

Nach einer weiteren Ausführungsform der Blende 5 gemäß Figur 4 kann eine Blende 5'''' vorgesehen sein, die eine Vielzahl von gitterartig angeordneten Löcher 27 als Durchgangsöffnungen aufweist. Durch diese geometrische Ausbildung der Blende 5```` läßt sich ein bestimmter optischer Effekt erzielen. Bei einer Entfernung von mehreren Metern von der Beleuchtungsvorrichtung erscheint dieselbe flächig und homogen. Nur bei geringerer Entfernung sind diese relativ klein gehaltenen Löcher 27 erkennbar, so dass gegebenenfalls auch im Rückraum 6 befindliche Bauteile einsehbar sind.

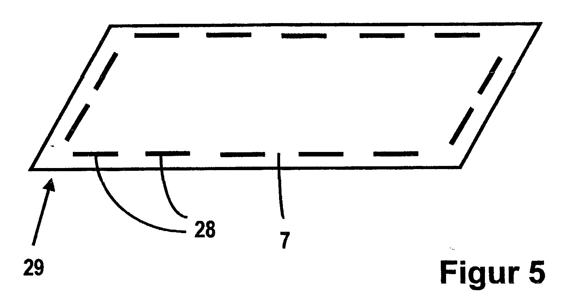

Nach einer Variante der Beleuchtungsvorrichtung gemäß Figur 5 kann zur Beheizung der Abdeckscheibe 7 ein Heizelement 28 unmittelbar an der Abdeckscheibe 7 angebracht sein. Nach der in Figur 5 dargestellten bevorzugten Ausführungsform sind mehrere unabhängig voneinander einschaltbare Heizelemente 28 in einem Randbereich 29 der Abdeckscheibe 7 angeordnet. Durch diese segmentierte Anordnung der Heizelemente 28 können unterschiedliche Bereiche der Abdeckscheibe 7 unabhängig voneinander beheizt werden, so dass hierdurch eine bedarfsgerechte und energiesparende Beheizung der Abdeckscheibe 7 ermöglicht wird. Diese Heizelemente 28 können als leitfähige Beschichtung oder Bedruckung auf vorzugsweise einer dem Auskoppelraum 3 zugewandten Seite der Abdeckscheibe 7 angebracht sein. Durch nicht dargestellte Anschlußleitungen sind die Heizelemente 28 jeweils mit einer nicht dargestellten Steuereinrichtung verbunden.

Die im vorhergehenden beschriebenen unterschiedlichen Geometrien und Beschaffenheiten der Blenden 5 können beliebig miteinander kombiniert werden. Beispielsweise kann die Ausbildung der Blende 5```` mit Löchern 27 sowohl mit einer transparenten als auch mit einer halbtransparenten oder nichttransparenten Materialausführung kombiniert sein.

## Patentansprüche

1. Beleuchtungsvorrichtung für Fahrzeuge mit einem Lichtleiter, der das von einer Lichtquelle ausgesandte Licht in einen Auskoppelraum des Fahrzeugs leitet, mit mindestens einem in dem Auskoppelraum und mit einem Ende des Lichtleiters gekoppelten Lichtauskoppelelement, das das Licht entsprechend einer vorgegebenen Lichtverteilung in die Umgebung abstrahlt, dadurch gekennzeichnet, dass die Öffnung des Auskoppelraums (3) mittels einer Abdeckscheibe (7) dichtend abgeschlossen ist und dass in einem Abstand zu der Abdeckscheibe (7) eine sich in einem Winkel zu einer optischen Achse des Lichtauskoppelelementes (1, 10, 11, 19, 24) durch den Auskoppelraum (3) erstreckende Blende (5, 5', 5'', 5''', 5'''') vorgesehen ist, die den Auskoppelraum (3) in einen der Abdeckscheibe (7) zugewandten Vorderraum (8) und einen der Abdeckscheibe (7) abgewandten Rückraum (6) trennt, und dass die Blende (5, 5', 5", 5"', 5'''') derart ausgebildet ist, dass in dem Rückraum (6) angeordnete Bauteile (16) optisch abgeschirmt sind.

2. Beleuchtungsvorrichtung nach Anspruch 1, dadurch gekennzeichnet, dass die Blende (5, 5', 5'') aus einem transparenten Material besteht und dass eine Oberfläche der Blende (5, 5`, 5``) strukturiert ausgebildet ist.

3. Beleuchtungsvorrichtung nach Anspruch 1, dadurch gekennzeichnet, dass die Blende (5, 5'') aus einem teiltransparenten und/oder opaken Material besteht.

4. Beleuchtungsvorrichtung nach einem der Ansprüche 1 bis 3, dadurch gekennzeichnet, dass in dem Rückraum (6) zusätzlich eine Lichtquelle (17) oder ein Lichtauskoppelelement angeordnet ist zur Hinterleuchtung der Blende (5, 5').

5. Beleuchtungsvorrichtung nach einem der Ansprüche 1 bis 4, dadurch gekennzeichnet, dass die Blende (5, 5', 5'', 5''', 5'''') eine Mehrzahl von Durchgangsöffnungen (9, 15, 18, 23) aufweist für den Durchtritt eines Luftstroms und/oder zum Einsatz des Lichtauskoppelelementes (1, 10, 11, 19, 25).

6. Beleuchtungsvorrichtung nach einem der Ansprüche 1 bis 5, dadurch gekennzeichnet, dass die Durchgangsöffnungen durch eine Mehrzahl von Schlitzen (15) gebildet sind, die sich im wesentlichen gleichmäßig in eine Richtung der Blende (5, 5') erstrecken.

7. Beleuchtungsvorrichtung nach einem der Ansprüche 1 bis 5, dadurch gekennzeichnet, dass die Durchgangsöffnungen als Löcher (27) ausgebildet sind, die sich gitterförmig verteilt über die Blende (5, 5'''') erstrecken.

8. Beleuchtungsvorrichtung nach einem der Ansprüche 1 bis 7, dadurch gekennzeichnet, dass das Lichtauskoppelelement (19) unter Bildung eines umlaufenden Spaltes (22) in eine Durchgangsöffnung (Aufnahmeöffnung 18) der Blende (5'') einsetzbar ist.

9. Beleuchtungsvorrichtung nach einem der Ansprüche 1 bis 8, dadurch gekennzeichnet, dass die Blende (5, 5') bereichsweise eine Vielzahl von benachbart zueinander angeordneten Aufnahmeöffnungen (13) zur Aufnahme von Lichtquellen aufweist, so dass die Gesamtzahl der Lichtquellen ein Lichtfeld (14) bilden.

10. Beleuchtungsvorrichtung nach einem der Ansprüche 1 bis 9, dadurch gekennzeichnet, dass sich die Blende (5, 5', 5'', 5''', 5'''') im wesentlichen parallel zur der Abdeckscheibe (7) erstreckt.

11. Beleuchtungsvorrichtung nach einem der Ansprüche 1 bis 10, dadurch gekennzeichnet, dass auf die Blende (5, 5```) eine Beschichtung aufgebracht ist, derart, dass sie halbtransparent ausgebildet ist.

12. Beleuchtungsvorrichtung nach einem der Ansprüche 1 bis 11, dadurch gekennzeichnet, dass die Blende (5) eingefärbt ist.

13. Beleuchtungsvorrichtung nach einem der Ansprüche 1 bis 12, dadurch gekennzeichnet, dass auf einer Seite der Blende (5, 5''') mindestens ein Heizelement (25) angeordnet ist.

14. Beleuchtungsvorrichtung nach Anspruch 13, dadurch gekennzeichnet, dass das Heizelement (25) auf einer der Abdeckscheibe (7) zugewandten Seite der Blende (5, 5''') in einem unteren Bereich angeordnet ist.

15. Beleuchtungsvorrichtung nach Anspruch 13 oder 14, dadurch gekennzeichnet, dass das Heizelement (25) in einem einstückig mit der Blende (5, 5''') verbundenen Kanal (26) gelagert ist.

16. Beleuchtungsvorrichtung nach einem der Ansprüche 13 bis 15, dadurch gekennzeichnet, dass das Heizelement (25) als Heizdraht ausgebildet ist und dass der Kanal (26) muldenförmig als Reflektor ausgebildet ist mit einer die Wärmestrahlung in Richtung der Abdeckscheibe (7) reflektierenden Oberfläche.

17. Beleuchtungsvorrichtung nach einem der Ansprüche 1 bis 16, dadurch gekennzeichnet, dass auf einer Innenseite der Abdeckscheibe (7) in einem Randbereich (29) derselben mehrere benachbarte Heizelemente (28) angeordnet sind, die selektiv ansteuerbar sind.

18. Beleuchtungsvorrichtung nach Anspruch 17, dadurch gekennzeichnet, dass die Heizelemente (28) reihenförmig angeordnet sind, wobei jeweils gegenüberliegende Heizelemente (28) gleichzeitig aktivierbar sind.
